# FASCICULE DE BREVET EUROPEEN

(11) **EP 0 954 824 B1**
(45) Date de publication et mention de la délivrance du brevet: **04.09.2002**
(21) Numéro de dépôt: 97953940.0
(22) Date de dépôt: 24.12.1997
(51) Int. Cl.: G06K 7/08, G06K 7/10, G06K 7/00, G06K 19/07

(54) **SYSTEME DE COMMUNICATION PAR INTERROGATION A DISTANCE PERMETTANT LA TRANSMISSION DE COMMANDES D'INHIBITION**
KOMMUNIKATIONSSYSTEM MITTELS FERNABFRAGE ZUR ÜBERTRAGUNG VON ABSCHALTBEFEHLEN
SYSTEM FOR COMMUNICATING BY REMOTE INTERROGATING FOR TRANSMITTING INHIBITING COMMANDS

(30) Priorité: 27.12.1996 FR 9616060
(43) Date de publication de la demande: 10.11.1999
(73) Titulaire: GEMPLUS, 13881 Gémenos Cédex (FR)
(72) Inventeur: LEDUC, Michel, F-13530 Trets (FR); KALINOWSKI, Richard, F-13470 Carnoux-en-Provence (FR)
(86) Numéro de dépôt international: FR9702415
(87) Numéro de publication internationale: WO98029826

(56) Documents cités:
- EP-A- 0 585 132
- EP-A- 0 689 151

## Description

La présente invention se rapporte à un système de communication entre un organe d'émission/réception interrogateur et une pluralité d'étiquettes électroniques répondeur contenant des informations. L'invention s'applique à tout système de communication radiofréquence (RF) mais aussi à tout système de communication infra-rouge (IR). Dans de tels systèmes l'organe interrogateur émet des signaux selon un protocole établi vers l'(les) étiquettes(s) afin de l'(les) interroger.

De tels systèmes peuvent notamment être utilisés pour la reconnaissance d'individus porteurs de badges, de véhicules porteurs de badges au péage d'une autoroute ou encore de marchandises entreposées ou mises en vente dans des magasins.

Les étiquettes électroniques, dénommées badges pour certaines applications, sont plus généralement dénommées "transpondeurs" (transmetteur-répondeur) car leur rôle principal est de transmettre des informations surtout en réponse aux ordres de l'organe interrogateur. Par conséquent, dans la suite de la description on parlera toujours de transpondeurs pour désigner ces étiquettes ou badges électroniques.

Les paramètres de communication d'un transpondeur sont en général fixés et le comportement du circuit intégré qu'il renferme est par conséquent figé pour le reste de son cycle de vie.

Cependant, ce comportement figé constitue un inconvénient puisqu'aucune adaptation aux conditions d'environnement du transpondeur n'est possible. Il est pourtant souvent avantageux de pouvoir faire évoluer certains paramètres, tels que la vitesse de transmission ou la durée de la séquence d'émission du circuit intégré par exemple, en fonction du niveau de perturbation du champ électromagnétique dans lequel se trouve le transpondeur ou en fonction de bruits parasites susceptibles d'apparaître cycliquement.

De plus, dans de nombreuses applications, telles que le stockage ou la vente de marchandises ou encore l'envoi de colis postaux par exemple, il est nécessaire de suivre l'évolution du produit étiqueté. L'évolution d'un produit peut notamment être suivie régulièrement lors de contrats de maintenance par exemple.

Toutefois, dans certains cas il peut s'avérer nécessaire de provoquer une inhibition temporaire ou définitive du circuit intégré d'un transpondeur afin d'interdire une utilisation ou une réutilisation d'un produit étiqueté lorsqu'elle n'est pas autorisée par le fournisseur.

De même, lorsque l'on achète un produit étiqueté par exemple, il peut être avantageux de provoquer une inhibition temporaire du circuit intégré d'un transpondeur afin de ne pas déclencher l'alarme d'un détecteur placé à la sortie d'un magasin.

Une telle inhibition temporaire permet une réactivation ultérieure du circuit intégré de manière à pouvoir effectuer des opérations telles que la maintenance du produit par exemple.

Dans ce cas l'organe interrogateur peut lire dans la mémoire du circuit intégré pour savoir quelle est la date d'achat ou la date de fin de garantie du produit par exemple. Eventuellement, il sera également possible d'écrire des informations dans la mémoire du circuit intégré, si celui-ci le permet, concernant les différentes interventions réalisées sur le produit.

De plus, dans le cadre d'opérations anti-fraude, il sera préférable de provoquer une inhibition définitive du circuit intégré du transpondeur de manière à éviter toute réutilisation intempestive du produit étiqueté.

Il existe déjà, actuellement, des systèmes de communication permettant des inhibitions. Le document EP-A-0 585 132 décrit notamment un interrogateur capable d'inhiber un transpondeur lorsqu'il éteint le champ d'énergie à l'intérieur d'une fenêtre d'écoute.

La demande de brevet PCT WO 92/22040 décrit quant à elle un système d'identification de transpondeurs pour lequel, lors de l'interrogation d'un transpondeur, les autres transpondeurs s'inhibent momentanément.

Pour cela, les transpondeurs comportent chacun un circuit de contrôle et de séquencement et des moyens d'inhibition. Les informations reçues par chaque transpondeur sont décodées et envoyées vers le circuit de contrôle et de séquencement qui les gère et les contrôle : il décide notamment de la réponse à envoyer, et du passage en mode inhibé du transpondeur. Lorsqu'il décide le passage en mode inhibé du transpondeur, il envoie un signal de commande aux moyens d'inhibition.

De tels circuits de contrôle destinés à provoquer l'inhibition des circuits intégrés sont cependant coûteux et ne peuvent pas, par conséquent, être intégrés dans des transpondeurs dits économiques c'est-à-dire à faible coût de revient.

Il a donc fallu trouver un moyen permettant de commander l'inhibition de circuits intégrés de transpondeurs économiques à partir de l'organe interrogateur.

De plus, un autre problème qui s'est posé réside dans le fait que, bien souvent, les transpondeurs économiques sont réalisés par des dispositifs électroniques passifs dérivant l'énergie d'alimentation du signal radiofréquence, ou infra-rouge, généré par l'organe interrogateur. De tels dispositifs sont réalisés par un circuit intégré à lecture seule, relié par deux contacts à une antenne.

Par conséquent, il a fallu trouver un moyen pour commander l'inhibition des circuits intégrés, à partir de l'organe interrogateur, sans possibilité dans ce cas d'écrire dans une zone mémoire de ces circuits intégrés.

La présente invention propose une solution consistant à mettre en place une technique simple et une technologie économique pour provoquer une inhibition contrôlée du circuit intégré d'un transpondeur à partir de l'organe interrogateur, le mode d'inhibition correspondant à une application étant mémorisé dans le message que le transpondeur envoie à l'organe interrogateur lors de son initialisation.

La présente invention a plus particulièrement pour objet un système de communication entre un organe d'émission/réception interrogateur, apte à émettre un champ d'énergie, et au moins un transpondeur comprenant un circuit intégré comportant une mémoire, principalement caractérisé en ce que, dans la réponse à l'initialisation, le transpondeur envoi un message (ATR) porteur notamment d'une information (MOD) caractéristique de son mode d'inhibition, et d'une information (RR) définissant la durée de périodes de veille (PV) entre deux messages, durant lesquelles l'organe interrogateur est susceptible d'envoyer une ou plusieurs commande(s) d'inhibition selon le mode inscrit (MOD), le circuit intégré ouvrant au moins une fenêtre d'écoute FE, à l'intérieur des périodes de veille PV, pendant laquelle il est susceptible de recevoir des signaux de commande d'inhibition envoyés par l'organe interrogateur.

Selon une autre caractéristique de l'invention, après l'envoi du message (ATR), le transpondeur envoie des informations (CMID, TMID, APID, TID, CRC) permettant son identification.

Selon une autre caractéristique de l'invention, l'instant d'ouverture de la (des) fenêtre(s) d'écoute (FE) est enregistré dans une mémoire de l'organe interrogateur en fonction du type de transpondeur (TID) et de l'information (RR) définissant la durée des périodes de veille (PV).

Selon une autre caractéristique de l'invention, les fenêtres d'écoute FE sont déclenchées à l'intérieur d'une ou de plusieurs périodes de veille PV successives ou non.

Selon une autre caractéristique de l'invention, les périodes de veilles PV du circuit intégré sont de durée fixe ou variable.

Lorsque la durée de ces périodes de veillé PV est fixe, elle correspond de préférence à celle d'un octet, et l'instant d'ouverture de chaque fenêtre d'écoute FE est définit par la position d'un bit prédéterminé de l'octet définissant la période de veille PV correspondante.

En revanche, lorsque la durée de ces périodes de veille PV est variable, elle est comprise entre la durée d'un bit et celle de 16 bits et déterminée selon une séquence pseudo-aléatoire, et l'instant d'ouverture de chaque fenêtre d'écoute FE est définit par la position d'un bit prédéterminé, de la période de veille PV correspondante, selon une séquence pseudo-aléatoire.

Selon une autre caractéristique de l'invention, une commande d'inhibition consiste à éteindre le champ d'énergie émis par l'organe interrogateur pendant une courte période.

De préférence l'organe interrogateur envoie un nombre prédéterminé de commandes d'inhibition, sous forme d'impulsions de coupure (PCI), à l'intérieur des fenêtres d'écoute FE.

Les différents modes d'inhibition du circuit intégré d'un transpondeur sont : l'inhibition définitive totale, l'inhibition définitive partielle, l'inhibition temporaire totale et l'inhibition temporaire partielle.

Grâce à ce système de communication, le circuit intégré du transpondeur, quel que soit son type (lecture/écriture ou lecture seule), peut détecter l'apparition ou la disparition du champ d'énergie, de type électromagnétique ou infra-rouge, émis par l'organe interrogateur. En effet, dans le cas d'un circuit intégré de type actif, celui-ci est suffisamment intelligent pour détecter les modifications du champ, tandis que dans le cas d'un circuit intégré de type passif ce champ est une condition nécessaire pour son fonctionnement.

La commande d'inhibition est réalisée par une modification du champ électromagnétique, ou infra-rouge. Cette modification consiste de façon pratique à réaliser des coupures du champ. De préférence ces coupures seront appliquées suivant une séquence en fonction des fenêtres d'écoute du circuit intégré du transpondeur..

De cette manière, la commande d'inhibition est transmise à un circuit intégré particulier ou à une famille de circuits intégrés au sein d'une application par exemple.

La commande d'inhibition ainsi transmise permet d'interdire toute modification des informations dans une mémoire du circuit intégré.

Le système selon l'invention permet d'utiliser des transpondeurs économiques à très bas coût puisqu'ils peuvent être fabriqués seulement à base de circuits intégrés de type passif, c'est à dire à lecture seule, ne disposant d'aucun circuit de démodulation et décodage, qui équipent normalement un circuit intégré du type lecture-écriture, ni de circuit de contrôle et de moyens d'inhibition destinés à déclencher l'inhibition.

D'autres particularités et avantages de l'invention apparaîtront à la lecture de la description faite à titre d'exemple non limitatif en référence aux figures annexées qui représentent:
- la figure 1, une organisation de la mémoire du circuit intégré d'un transpondeur,
- la figure 2, un schéma de principe illustrant la transmission d'une commande d'inhibition entre l'organe interrogateur et un transpondeur économique.

Dans la suite de la description le système de communication décrit est un système de communication radiofréquence (RF). Cependant, l'invention ne se limite pas à ce genre de système et peut être appliquée de la même manière à un système de communication infra-rouge.

Dans le cas d'un système de communication RF, un pont redresseur intégré dans le transpondeur permet d'extraire une énergie d'alimentation à partir des signaux radiofréquence générés par l'organe interrogateur. Lorsque le niveau de tension obtenue aux bornes du transpondeur atteint une valeur prédéterminée qui correspond à la tension d'alimentation du transpondeur, ce dernier se réveille ou s'initialise et commence alors à envoyer ses données à l'organe interrogateur.

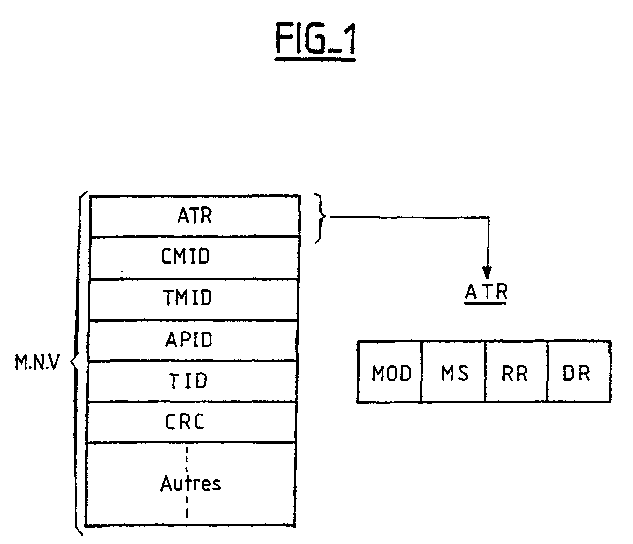

Les données destinées à être communiquées à l'organe interrogateur sont stockées dans au moins une mémoire non volatile MNV du circuit intégré d'un transpondeur. Cette mémoire non volatile est électriquement programmable de type EEPROM et/ou morte de type ROM ou PROM. L'organisation de cette mémoire MNV est représentée sur la figure 1.

La mémoire non volatile du circuit intégré est divisée en plusieurs zones dans lesquelles sont stockées des données. La première zone dénommée ATR (du terme anglo-saxon "Answer To Reset"), constituée de plusieurs octets, définit un message réunissant des informations caractéristiques du protocole d'échange et du circuit intégré. Ce message est destiné à être émis vers l'organe interrogateur en réponse à l'initialisation du transpondeur.

D'autres zones CMDI, TMID, APID, TID, et CRC peuvent être prévues pour définir respectivement le fabriquant du circuit intégré, le fabricant du transpondeur, l'application, le type de transpondeur, ou un circuit de contrôle d'erreur par exemple.

Le nom du fabriquant du circuit intégré ou celui du transpondeur est utile pour lutter contre la réalisation de puces ou de transpondeurs similaires.

L'information TID est importante car certaines données sont enregistrées dans une mémoire de l'organe interrogateur en fonction notamment du type de transpondeur utilisé. D'autres zones peuvent en outre être prévues pour le stockage d'autres données.

Le message de la zone ATR comprend notamment une information MOD caractéristique du mode d'inhibition du circuit intégré. De préférence cette information est placée en tête de l'ATR afin d'accélérer le traitement de lecture du contenu de la mémoire du circuit intégré et afin de faciliter le décodage par l'organe interrogateur.

Quatre types d'inhibitions sont possibles : l'inhibition définitive totale, l'inhibition définitive partielle, l'inhibition temporaire totale, ou l'inhibition temporaire partielle. Pour définir si le circuit intégré est inhibé ou non et, si oui, pour déterminer son mode d'inhibition, l'information MOD est de préférence codée sur 3 bits. Les applications des différents modes d'inhibition et leurs commandes sont expliquées plus en détails dans ce qui suit.

Une autre information MS du message ATR, quant à elle, permet de définir la taille mémoire du circuit intégré. Dans un exemple de réalisation de l'invention, cette information peut par exemple être codée sur 3 bits. Ainsi, grâce à cette information, l'organe interrogateur peut améliorer son dialogue avec le circuit intégré du transpondeur. On pourra ainsi coder des valeurs de taille mémoire comprise par exemple entre 80 bits et 16 Kbits. De manière avantageuse ces valeurs, correspondant à l'information MS codée sont stockées dans une mémoire de l'organe interrogateur.

D'autre part, l'information RR permet de déterminer la manière dont la transmission de données est effectuée entre le circuit intégré et l'organe interrogateur. En effet, pour éviter certains types de parasites radioélectriques, d'origine industrielle, survenant cycliquement, il est avantageux de faire en sorte que la transmission du contenu de la mémoire du circuit intégré soit réalisée de manière répétitive, séparée par des intervalles de pause, encore dénommés périodes de veille PV.

Durant ces périodes de veilles PV, le contenu de la mémoire du circuit intégré ne peut être lu. La durée de ces périodes est définie de manière fixe ou variable. Par conséquent, un bit de l'ATR permet d'informer l'organe interrogateur sur le type de répétition programmé pour la transmission de données.

Ainsi, lorsque le bit codant l'information RR est à 0, par exemple, la durée des périodes de veilles PV est fixe et correspond par exemple à celle d'un octet. Des fenêtres d'écoute FE du circuit intégré, durant lesquelles le circuit intégré est attentif, c'est à dire susceptible de détecter une commande d'inhibition en provenance de l'organe interrogateur, sont définies à l'intérieur de ces périodes de veille PV. L'instant d'ouverture de chaque fenêtre d'écoute FE est définit par la position d'un bit de l'octet de la période de veille PV correspondante.

Dans le cas contraire où le bit codant l'information RR est à 1, la durée des périodes de veille PV est variable et comprise entre la durée d'un bit et celle de 16 bits. Des fenêtres d'écoute FE du circuit intégré sont en outre définies de manière pseudo-aléatoire à l'intérieur de ces temps de veille.

Le rôle de l'information RR est expliqué de manière plus approfondie dans ce qui suit.

Enfin, l'information DR détermine la capacité de transmission, c'est-à-dire la vitesse des échanges entre le transpondeur et l'organe interrogateur. Elle peut être codée sur 2 bits par exemple, de manière à pouvoir définir quatre valeurs différentes de la vitesse de transmission maximale tolérée par le circuit intégré selon l'application à exécuter. Les valeurs de vitesse maximale tolérée correspondant à chaque code sont avantageusement enregistrées dans une mémoire de l'organe interrogateur.

Grâce à la connaissance de la valeur de la vitesse maximale de transmission du transpondeur, l'organe interrogateur peut ajuster sa vitesse de transmission par rapport à cette vitesse maximale selon les conditions d'environnement radioélectrique. Ceci permet par exemple d'éviter les problèmes de collision entre les réponses de plusieurs transpondeurs et de s'affranchir des parasites cycliques.

Ainsi, dans le cas où le champ électromagnétique est perturbé, l'organe peut abaisser la vitesse de transmission pour réduire les erreurs possibles d'interprétation des messages.

Au contraire, la vitesse peut être augmentée jusqu'à la vitesse maximale tolérée afin de réduire au minimum le temps de transmission lorsque l'environnement y est favorable, c'est-à-dire lorsqu'il ne subit pas beaucoup de perturbations. Dans un exemple de réalisation, la vitesse maximale de transmission pourra être égale à 1655 bits, ou 3310 bits, 13242 bits ou 26484 bits par seconde.

Ainsi, dans les applications de transports, c'est-à-dire lors d'un péage autoroutier par exemple, le circuit intégré devra nécessairement communiquer ses données avec une vitesse maximale élevée, par exemple une vitesse maximale de 26484 bits par seconde. En revanche, lors d'un contrat de maintenance, cette vitesse maximale n'a pas besoin d'être aussi élevée puisque le produit étiqueté est immobile, elle peut donc dans ce cas être fixée à 1655 bits ou 3310 bits par seconde par exemple.

Les informations caractéristiques définies dans le message ATR, sont de préférence transmises à l'organe d'émission/réception interrogateur en réponse à l'initialisation du transpondeur. Le dialogue entre l'organe interrogateur et le transpondeur se fait ensuite de manière classique, sous forme de questions-réponses.

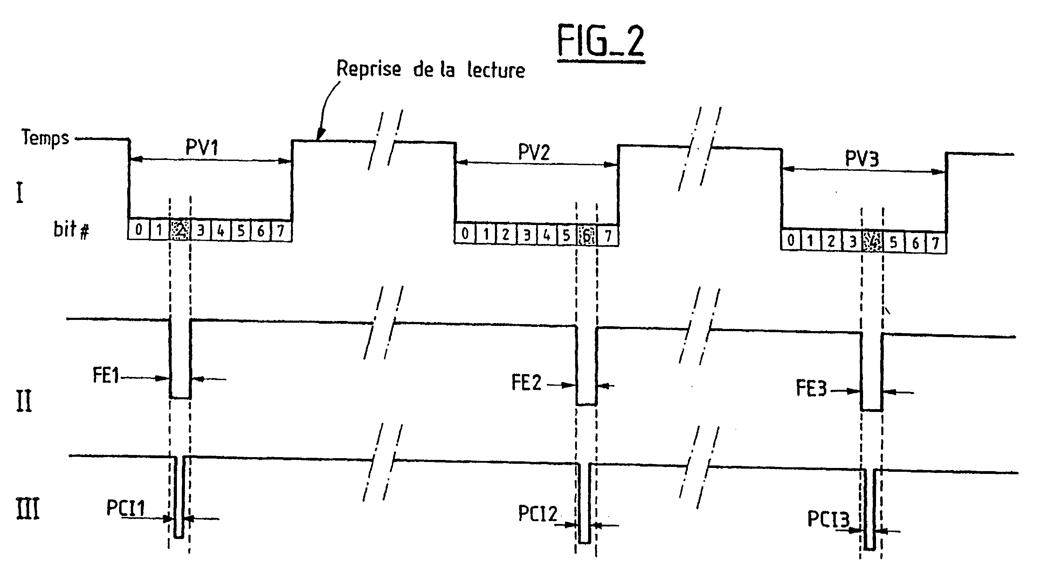

Le schéma de la figure 2 illustre un principe de transmission d'une commande d'inhibition du circuit intégré d'un transpondeur à partir de l'organe interrogateur.

La commande d'inhibition revient à éteindre au moins une fois le champ électromagnétique émis par l'organe interrogateur pendant une courte période. L'allure de la commande est représentée sur la figure 2 par le chronogramme III. La commande, comme cela est illustré, comporte des impulsions de coupure PCI1, PCI2, PCI3 du champ électromagnétique. Le nombre d'impulsions est quelconque, il est prédéterminé en fonction de chaque type de circuit intégré. Dans l'exemple représenté sur la figure 2, ce nombre est égal à trois. Ainsi, lorsque le circuit intégré a détecté les trois impulsions PCI d'arrêt du champ électromagnétique, il s'inhibe automatiquement.

Cependant, ces impulsions de coupure ne doivent pas être effectuées à n'importe quel moment. En effet, il est nécessaire de modifier le champ électromagnétique à des instants précis d'écoute du circuit intégré à inhiber. Ces instants d'écoute sont définis par les fenêtres d'écoute FE. Leur durée est de préférence égale à celle d'un bit. Elles sont déterminées à partir des périodes de veilles PV, elles-mêmes définies dans l'information RR du message ATR.

L'information RR comporte en effet au moins un bit pour permettre de définir les périodes de veille PV destinées à interrompre la lecture du contenu de la mémoire du circuit intégré. Ces périodes de veille sont de durée fixe ou variable selon la valeur du bit codant l'information RR.

Dans l'exemple représenté sur la figure 2, pour simplifier la compréhension, les périodes de veille PV sont de durée fixe. Dans ce cas, la durée de chaque période de veille PV correspond à la durée d'un octet, un bit ayant, de manière connue, une durée bien définie.

De manière avantageuse, la première période de veille PV1 est générée à partir de l'information CRC caractéristique du circuit de contrôle d'erreur du circuit intégré de manière à ce que la première période de veille, et par conséquent les périodes de veille suivantes, soient différentes d'un transpondeur à un autre.

Les fenêtres d'écoute FE du circuit intégré s'ouvrent alors à des instants prédéterminés, à l'intérieur des périodes de veille PV, de manière à rendre le circuit intégré attentif à des signaux de commande d'inhibition envoyés par l'organe interrogateur.

La durée de chaque fenêtre d'écoute correspond à celle d'un bit. La séquence qui définit les instants d'ouverture des fenêtres d'écoute est donnée par la position d'un bit d'une période de veille . De manière avantageuse, la position de ce bit sera différente pour chacune des trois périodes de veille successives utilisées pour l'inhibition.

Cette séquence est non seulement programmée dans le circuit intégré lors de sa fabrication, mais aussi enregistrée dans une mémoire de l'organe interrogateur en fonction du type de transpondeur (information TID) et de l'information RR définissant la durée des périodes de veille PV.

Ainsi, dans l'exemple représenté sur la figure 2, les trois fenêtres d'écoute FE du circuit intégré sont déclenchées respectivement sur les bits 2, 6 et 4 de trois périodes de veilles successives PV1, PV2, PV3, de durée fixe.

Ceci signifie que, lorsque les bits sont numérotés de 0 à 7, la première fenêtre d'écoute FE1 est déclenchée au bout d'une durée égale à (n+1) bits, n étant le numéro du bit correspondant à l'instant d'ouverture de la fenêtre FE1 , soit au bout d'une durée de 3 bits dans la première période de veille PV1. De même, la deuxième fenêtre d'écoute FE2 est ouverte au bout d'une durée de 7 bits dans la deuxième période de veille PV2 et l'ouverture de la troisième fenêtre d'écoute FE3 a lieu au bout d'une durée de 5 bits dans la troisième période de veille PV3.

Par conséquent, pour que le circuit intégré puisse détecter les trois commandes d'inhibition envoyées par l'organe interrogateur sous forme d'impulsions de coupure PCI1, PCI2, PCI3, il est nécessaire que ces dernières soient exécutées pendant les trois fenêtres d'écoute FE1, FE2, FE3 correspondantes, définies respectivement par les bits 2, 6 et 4 des périodes de veille PV1, PV2, PV3 successives.

L'exemple illustré n'est pas exhaustif, il existe beaucoup de variantes de réalisation. Ainsi, il est possible qu'une période de veille PV puisse contenir plusieurs fenêtres d'écoute FE du circuit intégré.

De plus, les fenêtres d'écoute du circuit intégré peuvent être définies à l'intérieur de plusieurs périodes de veille successives ou non.

Selon une autre variante de réalisation, la durée des périodes de veille PV peut être variable. Dans ce cas elle est comprise entre la durée d'un bit et celle de 2 octets.

La durée de chaque période de veille varie en fait selon une séquence déterminée de manière pseudo-aléatoire. Dans un premier temps, le circuit de contrôle d'erreur du circuit intégré envoi à l'organe interrogateur une information définissant la durée de la première période de veille PV1 et l'instant de son déclenchement. La durée des périodes de veille suivantes est ensuite déterminée selon une séquence pseudo-aléatoire stockée dans une mémoire de l'organe interrogateur, en fonction du type de transpondeur c'est à dire en fonction de l'information TID, et programmée dans le circuit intégré lors de sa fabrication. Cette séquence est par exemple la suivante: 5 bits, 13 bits, 1 bit, 9 bits, 4 bits, 12 bits, 16 bits, 8 bits, 7 bits, 15 bits, 3 bits, 11 bits, 6 bits, 14 bits , 2 bits, et 10 bits.

Par conséquent, lorsque la durée de la première période de veille est définie à 9 bits, par exemple, la période suivante aura une durée de 4 bits et ainsi de suite. De cette manière les périodes de veille sont toutes différentes d'un transpondeur à un autre.

Les fenêtres d'écoute FE, dont la durée correspond à celle d'un bit, sont ouvertes, à l'intérieur des périodes de veille PV, à un instant défini par la position d'un bit. Selon la durée de la période de veille PV, le bit définissant l'instant d'ouverture de la fenêtre d'écoute FE est différent. Ce bit est choisi de manière pseudo-aléatoire, selon une séquence programmée dans le circuit intégré lors de sa fabrication, et mémorisée dans l'organe interrogateur en fonction du type de transpondeur (TID) et du type de répétition programmée (RR). Cette séquence est représentée dans le tableau ci-dessous :

| durée de la période de veille PV | bit de déclenchement de la fenêtre d'écoute FE |
|---|---|
| 16 | 8 |
| 1 | 0 |
| 2 | 0 |
| 3 | 1 |
| 4 | 2 |
| 5 | 3 |
| 6 | 2 |
| 7 | 3 |
| 8 | 4 |
| 9 | 5 |
| 10 | 4 |
| 11 | 5 |
| 12 | 6 |
| 13 | 7 |
| 14 | 6 |
| 15 | 7 |

Ainsi, lorsque la durée de la période de veille du circuit intégré correspond à une durée de 14 bits par exemple, le circuit intégré est préprogrammé, lors de sa fabrication, pour que la fenêtre d'écoute correspondante s'ouvre sur le sixième bit.

Par ailleurs, lorsque l'inhibition est temporaire, sa durée peut être liée à une temporisation commandée par le circuit intégré. Cette temporisation est commandée par une horloge interne du circuit intégré. Dans le cas où le circuit intégré du transpondeur est un circuit intégré de type passif, les signaux RF reçus permettent d'actionner un circuit de génération de l'horloge interne.

Selon une variante, il est possible de faire en sorte que ce soit l'organe interrogateur qui commande le début et la fin de l'inhibition du circuit intégré. Dans ce cas, la fin de l'inhibition peut par exemple être commandée de la même façon, par une ou plusieurs manipulations du champ électromagnétique.

Grâce à ce système, la commande d'inhibition est transmise au circuit intégré sans avoir recours à une quelconque écriture dans sa mémoire si bien qu'il devient possible d'inhiber des transpondeurs économiques réalisés à base de circuits intégrés de type passif c'est à dire à lecture seule par exemple.

Les applications de ce système sont nombreuses, on en citera seulement quelques unes pour faciliter la compréhension de l'invention.

Dans le cas de la vente ou du stockage de marchandises étiquetées, telles que des ordinateurs ou des photocopieurs par exemple, il peut être avantageux d'inhiber le circuit intégré du transpondeur, au moment du paiement par exemple, pour ne pas déclencher l'alarme du détecteur placé à la sortie du magasin, ou au moment de la sortie de l'entrepôt pour ne pas que le circuit intégré puisse être activé durant le transport. Dans ce cas, l'inhibition réalisée est de préférence temporaire. Il apparaît en effet utile de pouvoir réactiver le circuit intégré du transpondeur pour effectuer les opérations ultérieures de maintenance par exemple.

L'inhibition temporaire peut être totale, auquel cas le détecteur placé à la sortie d'un magasin par exemple ne pourra rien détecter.

Cependant, dans certains cas il est préférable de commander une inhibition temporaire partielle du circuit intégré. En effet, grâce à cette inhibition partielle, le circuit intégré peut renvoyer un message indiquant qu'elle existe mais qu'elle est inhibée momentanément. De cette manière le détecteur placé à la sortie d'un magasin, ou d'un entrepôt, peut détecter le passage du produit étiqueté sans déclencher son alarme. Le détecteur peut ainsi contrôler le nombre de produits vendus par exemple, ce nombre pouvant notamment être utile pour contrôler la comptabilité de l'entrepôt.

Le circuit intégré est ensuite réactivé soit au bout d'une certaine durée temporisée par une horloge interne du circuit intégré, soit par un organe interrogateur utilisé ultérieurement pour effectuer des opérations de maintenance par exemple.

Lors de ces opérations de maintenance, l'organe interrogateur peut ainsi lire, dans le contenu de la mémoire du circuit intégré, des informations telles que la date de fin de garantie par exemple. Par ailleurs, si le circuit intégré le permet, l'organe interrogateur peut commander l'écriture, dans une zone mémoire, d'informations concernant la date d'intervention ou les opérations effectuées sur le produit par exemple.

Une autre application concerne l'envoi de colis postaux renfermant des produits étiquetés. Dans ce cas il peut être intéressant d'inhiber le circuit intégré du transpondeur de manière temporaire ou définitive lors de la réception du colis par le destinataire, de manière à pouvoir vérifier que le colis est arrivé à destination et à faciliter ainsi la gestion d'éventuelles réclamations.

Enfin, dans d'autres cas, il est nécessaire d'inhiber le circuit intégré d'un transpondeur de manière définitive afin d'éviter toute réutilisation non autorisée d'un produit étiqueté.

L'inhibition définitive peut être partielle de manière à ce que le circuit intégré émette en permanence un message destiné à indiquer sa présence et le fait qu'elle ne peut rien faire. L'inhibition partielle permet ainsi de vérifier que le circuit intégré n'est pas mort.

L'inhibition définitive peut en outre être totale. Dans ce cas le circuit intégré ne fait rien et il ne peut en aucun cas être différencié d'un circuit intégré mort.

## Revendications

1. Système de communication entre un organe d'émission/réception interrogateur apte à émettre un champ d'énergie, et au moins un transpondeur comprenant un circuit intégré comportant une mémoire, **caractérisé en ce que**, dans la réponse à l'initialisation, le transpondeur envoi un message (ATR) porteur notamment d'une information (MOD) caractéristique de son mode d'inhibition, et d'une information (RR) définissant la durée de périodes de veille (PV) entre deux messages, durant lesquelles l'organe interrogateur est susceptible d'envoyer une ou plusieurs commande(s) d'inhibition selon le mode inscrit (MOD), le circuit intégré ouvrant au moins une fenêtre d'écoute (FE), à l'intérieur des périodes de veille (PV), pendant laquelle il est susceptible de recevoir des signaux de commande d'inhibition envoyés par l'organe interrogateur.

2. Système de communication selon la revendication 1, **caractérisé en ce que** après l'envoi du message (ATR), le transpondeur envoie des informations (CMID, TMID, APID TID, CRC) permettant son identification, notamment une information caractéristique du type du transpondeur (TID).

3. Système de communication selon l'une des revendications 1 ou 2, **caractérisé en ce que** l'instant d'ouverture de la (des) fenêtre(s) d'écoute (FE) est enregistré dans une mémoire de l'organe interrogateur en fonction du type de transpondeur (TID) et de l'information (RR) définissant la durée des périodes de veille (PV).

4. Système de communication selon l'une des revendications 1 à 3, **caractérisé en ce que** les fenêtres d'écoute (FE) sont ouvertes à l'intérieur d'une ou de plusieurs périodes de veille (PV) successives ou non.

5. Système de communication selon l'une des revendications 1 à 4, **caractérisé en ce que** les périodes de veilles (PV) du circuit intégré sont de durée fixe ou variable.

6. Système de communication selon l'une des revendications 1 à 5, **caractérisé en ce que** lorsque la durée des périodes de veille (PV) est fixe, elle correspond à celle d'un octet, et l'instant d'ouverture de chaque fenêtre d'écoute (FE) est défini par la position d'un bit prédéterminé de l'octet définissant la période de veille (PV) correspondante.

7. Système de communication selon l'une des revendications 1 à 5, **caractérisé en ce que** lorsque la durée de chaque période de veille (PV) est variable, elle est comprise entre la durée d'un bit et celle de 16 bits et déterminée selon une séquence pseudo-aléatoire, et l'instant d'ouverture de chaque fenêtre d'écoute (FE) est défini par la position d'un bit prédéterminé, de la période de veille (PV) correspondante, selon une séquence pseudo-aléatoire.

8. Système de communication selon l'une des revendications 1 à 7, **caractérisé en ce qu'**une commande d'inhibition consiste à éteindre le champ d'énergie émis par l'organe interrogateur pendant une courte période.

9. Système de communication selon, l'une des revendications 1 à 8, **caractérisé en ce que** l'organe interrogateur envoie un nombre prédéterminé de commandes d'inhibition sous forme d'impulsions de coupure (PCI), à l'intérieur des fenêtres d'écoute (FE).

10. Système de communication selon l'une des revendications 1 à 9, **caractérisé en ce que** les différents modes d'inhibition du circuit intégré sont: l'inhibition définitive totale, l'inhibition définitive partielle, l'inhibition temporaire totale et l'inhibition temporaire partielle.

11. Système de communication selon l'une des revendications 1 à 10, **caractérisé en ce que** lorsque l'inhibition est temporaire, l'organe interrogateur commande le début et la fin.

12. Système de communication selon l'une des revendications 1 à 10, **caractérisé en ce que** lorsque l'inhibition est temporaire, sa durée est temporisée par une horloge interne du circuit intégré.

13. Système de communication selon l'une des revendications 1 à 12, **caractérisé en ce qu'**il consiste en un système de communication radiofréquence.

14. Système de communication selon l'une des revendications 1 à 12, **caractérisé en ce qu'**il consiste en un système de communication infra-rouge.

15. Système de communication selon l'une des revendications 1 à 14, **caractérisé en ce que** le circuit intégré est de type passif, à lecture seule.

## Patentansprüche

1. Kommunikationssystem zwischen einem abfragenden Sende-/Empfangsorgan, das ein Energiefeld senden kann, und mindestens einem Transponder mit einer einen Speicher umfassenden integrierten Schaltung, **dadurch gekennzeichnet, dass** der Transponder in der Initialisierungsantwort eine Meldung (ATR) sendet, die insbesondere eine für seinen Inhibitionsmodus charakteristische Information (MOD) und eine Information (RR) beinhaltet, die die Dauer der Standby-Perioden (PV) zwischen zwei Meldungen definiert, während der das abfragende Organ eine oder mehrere Inhibitionsbefehle gemäß dem eingetragenen Modus (MOD) senden kann, wobei die integrierte Schaltung innerhalb der Standby-Perioden (PV) mindestens ein Hörfenster (FE) öffnet, in dem sie vom abfragenden Organ gesendete Inhibitionsbefehlssignale empfangen kann.

2. Kommunikationssystem gemäß Anspruch 1, **dadurch gekennzeichnet, dass** der Transponder nach Versendung der Meldung (ATR) Informationen (CMID, TMID, APID TID, CRC) sendet, die seine Identifikation ermöglichen, insbesondere eine für den Typ des Transponders (TID) charakteristische Information.

3. Kommunikationssystem gemäß einem der Ansprüche 1 oder 2, **dadurch gekennzeichnet, dass** der Öffnungsmoment des (der) Hörfenster(s) (FE) in einem Speicher des abfragenden Organs entsprechend dem Typ des Transponders (TID) und der die Dauer der Standby-Perioden (PV) definierenden Information (RR) gespeichert wird.

4. Kommunikationssystem gemäß einem der Ansprüche 1 bis 3, **dadurch gekennzeichnet, dass** die Hörfenster (FE) innerhalb einer oder mehrerer Standby-Perioden (PV), die aufeinander folgen oder nicht, geöffnet sind.

5. Kommunikationssystem gemäß einem der Ansprüche 1 bis 4, **dadurch gekennzeichnet, dass** die Standby-Perioden (PV) der integrierten Schaltung von unveränderlicher oder veränderlicher Dauer sind.

6. Kommunikationssystem gemäß einem der Ansprüche 1 bis 5, **dadurch gekennzeichnet, dass** wenn die Dauer der Standby-Perioden (PV) unveränderlich ist, sie derjenigen eines Bytes entspricht, und der Öffnungsmoment eines jeden Hörfensters (FE) von der Position eines vorgegebenen Bits des die entsprechende Standby-Periode (PV) definierenden Bytes festgelegt wird.

7. Kommunikationssystem gemäß einem der Ansprüche 1 bis 5, **dadurch gekennzeichnet, dass** wenn die Dauer jeder Standby-Periode (PV) veränderlich ist, sie zwischen der Dauer eines Bits und derjenigen von 16 Bits liegt und gemäß einer pseudo-zufälligen Sequenz bestimmt wird, und der Öffnungsmoment eines jeden Hörfensters (FE) von der Position eines vorgegebenen Bits der entsprechenden Standby-Periode (PV) gemäß einer pseudo-zufälligen Sequenz festgelegt wird.

8. Kommunikationssystem gemäß einem der Ansprüche 1 bis 7, **dadurch gekennzeichnet, dass** ein Inhibitionsbefehl darin besteht, das vom abfragenden Organ gesendete Energiefeld während einer kurzen Periode abzuschalten.

9. Kommunikationssystem gemäß einem der Ansprüche 1 bis 8, **dadurch gekennzeichnet, dass** das abfragende Organ eine vorgegebene Anzahl von Inhibitionsbefehlen in Form von Abschaltimpulsen (PCI) innerhalb der Hörfenster (FE) sendet.

10. Kommunikationssystem gemäß einem der Ansprüche 1 bis 9, **dadurch gekennzeichnet, dass** die verschiedenen Inhibitionsweisen der integrierten Schaltung wie folgt lauten: komplette definitive Inhibition, teilweise definitive Inhibition, komplette zeitweilige Inhibition und teilweise zeitweilige Inhibition.

11. Kommunikationssystem gemäß einem der Ansprüche 1 bis 10, **dadurch gekennzeichnet, dass** wenn die Inhibition zeitweilig ist, das abfragende Organ den Anfang und das Ende steuert.

12. Kommunikationssystem gemäß einem der Ansprüche 1 bis 10, **dadurch gekennzeichnet, dass** wenn die Inhibition zeitweilig ist, ihre Dauer von einem internen Zeitwerk der integrierten Schaltung verzögert wird.

13. Kommunikationssystem gemäß einem der Ansprüche 1 bis 12, **dadurch gekennzeichnet, dass** es aus einem Funkfrequenz-Kommunikationssystem besteht.

14. Kommunikationssystem gemäß einem der Ansprüche 1 bis 12, **dadurch gekennzeichnet, dass** es aus einem Infrarot-Kommunikationssystem besteht.

15. Kommunikationssystem gemäß einem der Ansprüche 1 bis 14, **dadurch gekennzeichnet, dass** die integrierte Schaltung passiv ist und nur zum Lesen dient.

## Claims

1. A communication system between an interrogating transmission/reception device able to emit an energy field, and at least one transponder comprising an integrated circuit including a memory, **characterised in that**, in the response to initialisation, the transponder sends a message (ATR) carrying in particular an item of information (MOD) characteristic of its inhibition mode, and an item of information (RR) defining the duration of standby periods (PV) between two messages, during which the interrogating device is able to send one or more inhibition commands according to the mode entered (MOD), the integrated circuit opening at least one listening window (FE), within the standby periods (PV), during which it is able to receive inhibition control signals sent by the interrogating device.

2. A communication system according to Claim 1, **characterised in that**, after the sending of the message (ATR), the transponder sends information (CMID, TMID, APID TID, CRC) allowing its identification, in particular an item of information characteristic of the type of transponder (TID).

3. A communication system according to one of Claims 1 or 2, **characterised in that** the time of opening of the listening window or windows (FE) is recorded in a memory of the interrogating device according to the type of transponder (TID) and the information (RR) defining the duration of the standby periods (PV).

4. A communication system according to one of Claims 1 to 3, **characterised in that** the listening windows (FE) are open within one or more standby periods (PV), successive or otherwise.

5. A communication system according to one of Claims 1 to 4, **characterised in that** the standby periods (PV) of the integrated circuit are of a fixed or variable duration.

6. A communication system according to one of Claims 1 to 5, **characterised in that**, when the duration of the standby periods (PV) is fixed, it corresponds to that of one byte, and the opening time of each listening window (FE) is defined by the position of a predetermined bit of the byte defining the corresponding standby period (PV).

7. A communication system according to one of Claims 1 to 5, **characterised in that**, when the duration of each standby period (PV) is variable, it is between the duration of one bit and the duration of 16 bits and determined according to a pseudo-random sequence, and the type of opening of each listening window (FE) is defined by the position of a predetermined bit, of the corresponding standby period (PV), according to a pseudo-random sequence.

8. A communication system according to one of Claims 1 to 7, **characterised in that** an inhibition command consists in extinguishing the energy field emitted by the interrogating device for a short period.

9. A communication system according to one of Claims 1 to 8, **characterised in that** the interrogating device sends a predetermined number of inhibition commands in the form of cutoff pulses (PCI), within the listening windows (FE).

10. A communication system according to one of Claims 1 to 9, **characterised in that** the different integrated-circuit inhibition modes are: total definitive inhibition, partial definitive inhibition, total temporary inhibition and partial temporary inhibition.

11. A communication system according to one of Claims 1 to 10, **characterised in that**, when the inhibition is temporary, the interrogating device controls the start and end.

12. A communication system according to one of Claims 1 to 10, **characterised in that**, when the inhibition is temporary, its duration is timed by an internal clock of the integrated circuit.

13. A communication system according to one of Claims 1 to 12, **characterised in that** it consists of a radio frequency communication system.

14. A communication system according to one of Claims 1 to 12, **characterised in that** it consists of an infrared communication system.

15. A communication system according to one of Claims 1 to 14, **characterised in that** the integrated circuit is of the passive type, for reading alone.
